# EUROPÄISCHE PATENTSCHRIFT

(11) **EP 0 346 829 B1**
(45) Veröffentlichungstag und Bekanntmachung des Hinweises auf die Patenterteilung: **24.11.1993**
(21) Anmeldenummer: 89110683.3
(22) Anmeldetag: 13.06.1989
(51) Int. Cl.: F23N 5/24, F23N 5/02

(54) **In mehreren Leistungsstufen betreibbares Heizgerät für Kraftfahrzeuge**
Motor car heating device with several output stages
Dispositif de chauffage à plusieurs niveaux de puissance pour voitures

(30) Priorität: 15.06.1988 DE 3820442
(43) Veröffentlichungstag der Anmeldung: 20.12.1989
(73) Patentinhaber: Firma J. Eberspächer, 73730 Esslingen (DE)
(72) Erfinder: Reiser, Peter, D-7300 Esslingen (DE); Steiert, Edwin, 7448 Wolfschlugen (DE); Schaffert, Wolfgang, D-7307 Aichwald 3 (DE)

(56) Entgegenhaltungen:
- DE-A- 3 517 953
- FR-A- 1 288 803
- FR-A- 2 599 820
- US-A- 4 172 555
- PATENT ABSTRACTS OF JAPAN vol. 6, no. 115 (E-115)(993) 26 Juni 1982;& JP-A-57 43537
- PATENT ABSTRACTS OF JAPAN vol. 7, no. 95 (M-209)(1240) 21 April 1983;& JP-A-58 19625

## Beschreibung

Die Erfindung betrifft ein in mehreren Leistungsstufen betreibbares Heizgerät für Kraftfahrzeuge nach dem Oberbegriff des Anspruchs 1.

Derartige Heizgeräte werden als sogenannte Stand-, Fremd- oder Zusatzheizungen in Bussen, Lastkraftwagen, Erdbewegungsfahrzeugen sowie anderen Fahrzeugen, auch in Personenkraftwagen verwendet. Es gibt verschiedene Ausführungsformen derartiger Heizgeräte. Man unterscheidet zum einen zwischen Heizgeräten mit Wasser bzw. mit Luft als Wärmemedium; zum anderen unterscheidet man zum Beispiel nach Typ und Leistung des Brenners, zum Beispiel gibt es Verdampferbrenner, Brenner mit Druckzerstäuber und Brenner mit Rotationszerstäuber. Auch unterscheidet man nach Art der Flammentzündung, zum Beispiel mittels Funkenstrecke oder Glühkerze.

Für den Betrieb des Brenners eines solchen Heizgeräts gibt es bestimmte Vorschriften. Eine dieser Vorschriften besagt, daß nach dem Starten des Brenners, speziell nach dem Beginn der Brennstofförderung, innerhalb einer Zeitspanne von 180 Sekunden die Flamme brennen muß. Eine andere Vorschrift besagt, daß, wenn die Flamme im stationären Betrieb abbricht, dieser Fehlerzustand, d. h. der Flammenabbruch, innerhalb von 240 Sekunden erkannt sein muß, damit noch rechtzeitig die Brennstofförderung gestoppt werden kann, bevor große Mengen Brennstoff in die Brennkammer einströmen und eine Gefahrenquelle darstellen können.

Die oben angesprochenen Vorschriften für den Betrieb des Brenners machen eine direkte oder indirekte Flammenüberwachung erforderlich. Eine direkte Flammenüberwachung wird z. B. erreicht durch Verwendung eines optischen Sensors, z. B. eines Phototransistors, der ein Ausgangssignal liefert, solange er von der hellen Flamme beleuchtet wird. In manchen Fällen verbietet sich jedoch die Anbringung eines optischen Sensors im Inneren der Brennkammer. Unter Umständen kann man dann ein Thermoelement verwenden, das nicht innerhalb der Brennkammer angeordnet ist, sondern außen an der Brennkammerwand oder auf dem Wärmetauscher montiert ist. Voraussetzung für die Verwendung eines solchen Thermoelements ist jedoch, daß dieses relativ rasch reagiert, die Brennkammerwand oder die Wärmetauscherwand also gutes Wärmeleitvermögen besitzt, also nicht thermisch träge ist.

Problematisch ist die Verwendung von Thermoelementen auf der Außenseite der Brennkammerwand oder der Wärmetauscherwand bei Druckgußwärmetauschern, die üblicherweise aus Aluminium bestehen. Bei diesen Wärmetauschern ändert sich die Temperatur außen auf der Brennkammerwand bzw. der Wärmetauscherwand bei Temperaturänderungen im Inneren der Brennkammer nur relativ langsam. Bislang hat man zum Beispiel einen Bimetallschalter eingesetzt, der zum Erkennen des Zündens einer Flamme nach Starten des Heizgeräts beim Überschreiten einer bestimmten ersten Temperatur geöffnet (oder geschlossen) hat, um bei Unterschreiten einer bestimmten zweiten Temperatur zu schließen (bzw. zu öffnen), um dadurch einen Flammenabbruch zu erkennen. Derartige Bimetallschalter sind relativ zuverlässig. Sie werden abhängig von den Temperaturänderungsgeschwindigkeiten auf der Außenseite der Brennkammerwand bzw. Außenseite der Wärmetauscherwand für die jeweiligen Heizgerätetypen im Rahmen der Herstellung des Gerätes justiert.

Problematisch ist die Verwendung derartiger, relativ langsam reagierender Zwei-Punkt-Schalter jedoch bei Heizgeräten, die in mehreren, zum Beispiel zwei, Leistungsstufen arbeiten können. Wird das Gerät nämlich von einer relativ hohen Leistungsstufe auf eine tiefere Leistungsstufe umgeschaltet, so geht damit zunächst ein relativ steiler Temperaturabfall einher, woraufhin sich die Temperatur auf einem relativ niedrigen Temperaturniveau einregelt. Das relativ niedrige Temperaturniveau bei KLEIN-Stellung ist so niedrig, daß bei Flammenabbruch aus dem Betrieb "GROSS" die Temperatur nicht innerhalb der vorgeschriebenen vier Minuten erreicht wird. Möglicherweise liegt das niedrige Temperaturniveau noch unterhalb der Schalttemperatur für Flammenerkennung.

In der DE 35 17 953 A1 ist ein Heizgerät mit einer Regeleinrichtung für die Heizleistung beschrieben. Zum Regeln wird der Temperaturgradient für die Aufheizung des Wärmetauschmediums zwischen zwei Temperaturschwellenwerten ermittelt. Es wird festgestellt, wie lange das Wärmeaustauschmedium braucht, um zwischen einem ersten und einem zweiten Temperaturschwellenwert aufgeheizt zu werden. Diese Aufheizdauer wird mit einem bestimmten Vorgabewert verglichen und abhängig vom Vergleichsergebnis werden dann verschiedene Regelbereiche durchlaufen. Diese Regelung eignet sich jedoch nicht für eine Flammenüberwachung, die einerseits in der Lage ist, eine ausbleibende Zündung festzustellen, und die andererseits auch einen Flammenabbruch während des Normalbetriebs feststellen kann.

Aus der JP-A-58-19625 ist ein Verfahren zur Flammenüberwachung bei mit Gas betriebenen Heizgeräten bekannt, nach welchem unmittelbar nach dem Start des Heizgerätes über die Veränderung der elektrischen Leitfähigkeit eines Sensors im Vergleich mit einem durch Widerstände fest eingestellten Spannungswert festgestellt wird, ob eine Flamme vorhanden ist oder nicht. Ist es zu keiner Flammenausbildung gekommen, wird das Gaszuflußventil geschlossen. Solange der gemessene Wert der Leitfähigkeit oberhalb des fest eingestellten Vergleichswertes liegt, brennt die Flamme, sobald ein plötzlicher Abfall in der Leitfähigkeit des Sensors auftritt, schaltet das Ventil ebenfalls den Gaszufluß ab. Mit dieser Anordnung ist jedoch keine Flammenüberwachung für Heizgeräte möglich, die mit unterschiedlichen Leistungsstufen betrieben werden.

Der Erfindung liegt die Aufgabe zugrunde, ein in mehreren Leistungsstufen betreibbares Heizgerät der eingangs genannten Art derart weiterzubilden, daß mit einem einzigen indirekt arbeitenden Fühler auch dann eine zuverlässige Flammenüberwachung des Gerätes möglich ist, wenn das Gerät in verschiedenen Leistungsstufen betrieben wird.

Diese Aufgabe wird durch die im Anspruch 1 angegebene Erfindung gelöst. Vorteilhafte Weiterbildungen ergeben sich aus den Unteransprüchen.

Der erfindungsgemäß verwendete Fühler ist an sich bekannt. Es handelt sich zum Beispiel um einen PTC-Widerstand, ein Thermoelement oder ein ähnliches Bauelement, das ein elektrisches Signal abgibt, dessen Amplitude von der gefühlten Temperatur abhängt. Die Steuerschaltung wertet nun dieses Signal dahingehend aus, daß wiederholt, zum Beispiel in regelmäßigen Zeitabständen, jeweils ein Wert gebildet wird, welcher kennzeichnend ist für die Geschwindigkeit der Temperaturänderung, d.h. für die Geschwindigkeit eines Temperaturanstiegs oder eines Temperaturabfalls. Mit anderen Worten: Es werden Gradientenwerte ermittelt, die die Tendenz der Temperaturänderung kennzeichnen.

Durch Vorversuche werden bestimmte Temperaturverläufe am Ort des Fühlers für verschiedene Betriebszustände ermittelt und als Vorgabewerte gespeichert. So wird zum Beispiel die Anstiegstemperatur im Bereich des Fühlers nach dem Start des Brenners ermittelt und aufgezeichnet. Außerdem wird, wenn der Brenner im stationären Zustand arbeitet, also die Temperatur am Fühler in relativ engen Grenzen konstant ist, die Flamme unterbrochen und der daraufhin erfolgende Temperaturabfall am Fühler festgestellt. Innerhalb der Brennkammer nimmt die Temperatur nach einem Flammenabbruch relativ rapide ab. Aufgrund der thermischen Trägheit des Wärmetauschers nimmt die Temperatur an der Außenwand des Wärmetauschers jedoch nur relativ langsam ab. In entsprechender Weise wird der Temperaturabfall am Fühler beim Umschalten des Brennerbetriebes von hoher Leistung auf niedrige Leistung ermittelt.

Die so ermittelten Werte werden zum Beispiel im Speicher eines als Steuerschaltung dienenden Mikroprozessors gespeichert.

Im Betrieb des Heizgeräts werden dann laufend, d.h. in bestimmten Zeitabständen, Temperaturgradientenwerte gebildet und mit den jeweiligen vorgespeicherten Gradientenwerten verglichen. Der Vergleich ergibt, ob eventuell ein Temperaturabfall oder ein Temperaturaustieg (letzteres ist beim Starten des Heizgeräts von Interesse) vorliegt. Das Ermitteln der Übereinstimmung der fortlaufend ermittelten Gradientenwerte mit den vorab gespeicherten Werten geschieht durch Differenzbildung. Unterschreiten die jeweiligen Grenzwerte einen gewissen Toleranzwert, so wird dies als Übereinstimmung gewertet.

Beim Starten des Heizgeräts werden die von dem Fühler gelieferten Ausgangssignale in Gradientenwerte umgesetzt. Diese Gradientenwerte entsprechen einer oder mehreren Tangenten an die Temperaturanstiegs-Kurve. Ein Vergleich mit den vorab gespeicherten Temperturanstiegs-Werten ergibt, ob die Flamme gezündet wurde oder nicht. Im Hinblick auf die vorgeschriebenen Sicherheitsbestimmungen ermöglicht die erfindungsgemäße Vorgehensweise, nach dem Starten des Heizgeräts bereits vor Ablauf der für die Flammentzündung vorgeschriebenen Zeitspanne von 180 Sekunden festzustellen, ob diese Zeit eingehalten wird. Wird durch den Vergleich des aktuellen Temperaturgradientens mit dem vorab gespeicherten Gradienten das Ergebnis geliefert, daß innerhalb der Zeitspanne von 180 Sekunden kein eine Flammentzündung kennzeichnender Temperaturanstieg gegeben ist, so wird die Brennstoffzufuhr abgeschaltet.

Bei einem Temperaturabfall werden ebenfalls Temperaturgradienten-Werte ermittelt und mit den vorab gespeicherten Werten verglichen. Die Unterscheidung zwischen einem Flammenabbruch einerseits und einem Umschalten auf eine geringere Leistungsstufe andererseits erfolgt auf der Grundlage der Tatsache, daß der Temperaturabfall bei einem Flammenabbruch steiler ist als bei einem Umschalten des Geräts auf eine kleinere Leistungsstufe. Anhand der Vergleichsergebnisse läßt sich also eine Aussage darüber treffen, ob ein Temperaturabfall auf eine Fehlfunktion, also einen Flammenabbruch, zurückzuführen ist oder lediglich auf eine Umschaltung auf geringere Leistung. Im ersteren Fall muß die Brennstoffzufuhr gesperrt werden, im letzteren Fall brauchen keine Maßnahmen getroffen zu werden.

In ähnlicher Weise läßt sich der Flammenabbruch beim stationären Betrieb kleiner Leistungsstufen erkennen.

In einer besonders bevorzugten Ausführungsform der Erfindung ist die einen Rechner enthaltende Auswerteeinrichtung der Steuerschaltung derart ausgebildet, daß aus einer zu jeweils einem Zeitpunkt t₁ herrschenden Ist-Temperatur ϑ₁ nach einem spezifische Geräteeigenschaften als Parameter berücksichtigenden Algorithmus eine Zieltemperatur ϑ₂ für einen Zeitpunkt t₂ berechnet wird, der von dem Zeitpunkt t₁ einen bestimmten zeitlichen Abstand hat. Zu diesem Zeitpunkt t₂ wird dann die tatsächliche Temperatur ermittelt, und anhand eines Vergleichs erfolgt eine Überprüfung der Richtigkeit des Ergebnisses der Vorausberechnung. Der Algorithmus wird ebenfalls anhand von Versuchen formuliert. Berücksichtigt werden spezifische Geräteeigenschaften wie Wärmeleiteigenschaften, Temperaturgradienten und dgl. Bei dieser Ausführungsform der Erfindung kann man auf eine Speicherung von Soll-Gradienten verzichten. Gespeichert werden muß lediglich der Algorithmus.

Im folgenden wird ein Ausführungsbeispiel der Erfindung anhand der Zeichnung näher erläutert. Es zeigen:
- Fig. 1: eine graphische Dartellung eines Temperaturverlaufs zur Erläuterung der Erfindung, und
- Fig. 2: ein Blockschaltbild eines Heizgerätes für ein Kraftfahrzeug mit Steuereinrichtung.

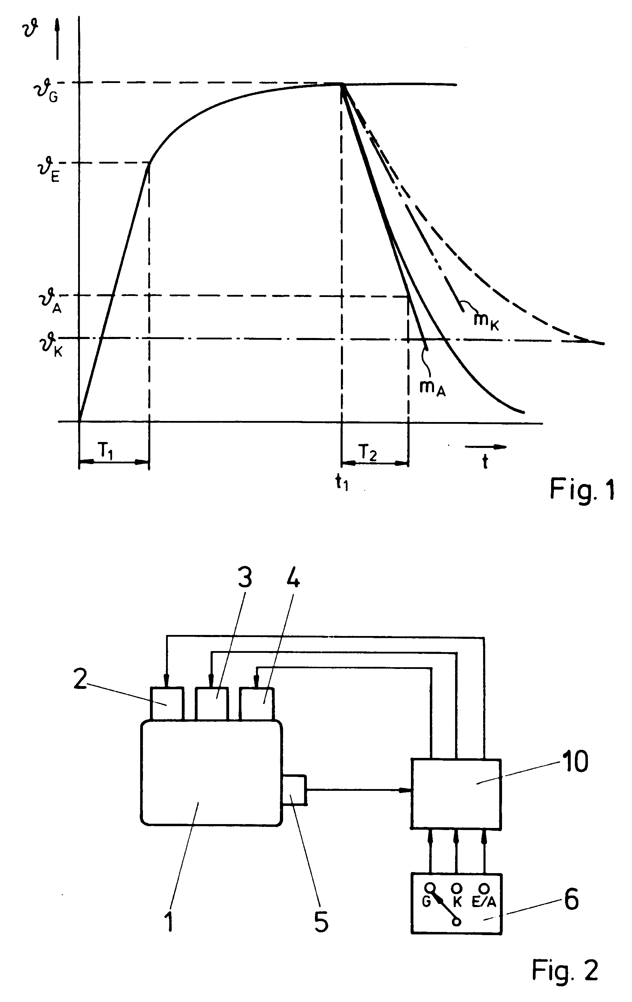

Es sei zunächst Fig. 1 betrachtet. Auf der Abszisse ist Zeit t, auf der Ordinate die Temperatur ϑ aufgetragen. Wenn im Zeitpunkt 0 der Brenner des Heizgeräts gestartet wird, d.h. insbesondere die Brennstoffzufuhr (Diesel oder Benzin) eingeleitet wird und die Flamme entzündet wurde, steigt die Temperatur ϑ exponentiell an. Der Temperaturanstieg entspricht zunächst einer Geraden. Bei Erreichen einer Temperatur ϑ_{E} innerhalb einer Zeitspanne T₁ erfüllt der Brenner die Vorschrift, daß innerhab der Zeitspanne T₁ = 180 Sekunden eine Flamme entstanden ist. Die Temperatur steigt dann weiter an, um sich schließlich beim stationären Betrieb an eine Temperatur ϑ_{G} anzunähern. Dieses Temperaturniveau entspricht einem Betrieb des Heizgeräts bei großer Leistung (G = groß).

Wenn zum Beispiel im Zeitpunkt t₁ das Heizgerät umgeschaltet wird auf kleine Leistung, wobei dann das Gerät bei einer Temperatur ϑ_{K} (K = klein) arbeitet, erfolgt zunächst ein relativ steiler Temperaturabfall, bis sich die Temperatur der konstanten Temperatur ϑ_{K} annähert. Zu Beginn des Temperaturabfalls entspricht die Steigung der Kurve der Steigung einer an die Kurve gelegten Tangente m_{K}.

Vergleicht man den Temperaturabfall beim Umschalten des Geräts von große auf kleine Leistungsstufe mit dem Temperaturabfall bei einem (einem Störfall entsprechenden) Flammenabbruch, so zeigt sich, daß im Störfall der Temperaturabfall wesentlich steiler ist. Wenn im Zeitpunkt t₁ die Flamme abbricht, fällt die Temperatur zunächst entsprechend einer an die Abfallkurve gelegten Tangente m_{A} ab, bis die Temperatur schließlich der Umgebungstemperatur entspricht. Wenn die Temperatur innerhalb einer Zeitspanne T₂ nach dem Zeitpunkt t₁ unter einen Wert ϑ_{A} abfällt, entspricht dies der gesetzlich vorgeschriebenen Zeit bis zum Erkennen eines Flammenabbruchs.

Wenn die Temperatur bei einem Flammenabbruch von dem konstanten Wert ϑ_{K} weiter abnimmt, ergibt sich ebenfalls exponentieller Temperaturabfall mit entsprechender Tangente.

Die Erfindung basiert auf dem oben geschilderten Temperaturverlauf im Bereich eines an der Außenwand eines Wärmetauschers angebrachten Fühlers für die genannten verschiedenen Betriebssituationen.

Fig. 2 zeigt ein Blockschaltbild einer mit Benzin oder Diesel betriebenen Standheizung für ein Kraftfahrzeug.

Ein Heizgerät 1 ist mit einem nicht näher dargestellten Brenner ausgestattet. In den Brenner wird von einem Verbrennungsluftgebläse 2 Luft eingeblasen. Eine Dosierpumpe 3 fördert je nach eingestellter Leistungsstufe des Heizgeräts eine große oder eine kleine Menge Brennstoff an beispielsweise eine Mischeinrichtung im Bereich der Brennkammer. Eine Glühkerze 4 (es kann sich alternativ auch um eine Zünd funkenstrecke handeln) sorgt für das Zünden des Brennstoff-/Luft-Gemisches.

Gesteuert wird das Heizgerät von einer Steuerschaltung 10, die das Verbrennungsluftgebläse 2, die Dosierpumpe 3 und die Glühkerze 4 ansteuert.

An der Außenwand eines Druckgußwärmetauschers des Heizgeräts 1 ist als Fühler ein PTC-Widerstand angebracht, der Ausgangssignale liefert, deren Amplituden zur gefühlten Temperatur proportional sind.

Die Steuerschaltung 10 empfängt die Ausgangssignale des Fühlers 5, außerdem Betriebssteuersignale von einer Schalttafel 6. Wie in Fig. 2 schematisch angedeutet ist, kann mittels der Schalttafel 6 das Heizgerät auf hoher Leistungsstufe (G), auf kleine Leistungsstufe (K) oder ausgeschaltet werden (E/A).

Die Steuerschaltung 10 enthält zum Beispiel einen Mikroprozessor, der die Werte des Ausgangssignals des Fühlers 5 in regelmäßigen Zeitabständen übernimmt und Gradientenwerte bildet. Dies geschieht beispielsweise dadurch, daß zwei aufeinanderfolgende Temperatur-Abtastwerte durch einen Abtastintervallwert dividiert werden.

Der als Steuerschaltung dienende Mikroprozessor 10 enthält einen Speicher, in dem vorab empirisch ermittelte Temperaturgradienten-Werte für verschiedene Betriebssituationen gespeichert wurden. Es gibt Gradientenwerte für den Temperaturanstieg bei Starten des Geräts, Gradientenwerte für einen Temperaturabfall bei einem Flammenabbruch, und zwar für jeweils die große und die kleine Leistungsstufe des Heizgeräts, und Gradientenwerte für den Temperaturabfall beim Umschalten des Heizgeräts von großer auf kleine Leistung. Die fortlaufend ermittelten Gradientenwerte werden mit den einzelnen vorab gespeicherten Gradientenwerten durch Differenzbildung verglichen. Übereinstimmung der verglichenen Werte liegt definitionsgemäß zum Beispiel dann vor, wenn die Differenzen kleiner als ein Vorgabewert sind. Abhängig von dem Vergleichsergebnis reagiert die Steuerung 10 entweder überhaupt nicht oder mit einer Notmaßnahme.

Die Gradientenwerte entsprechen Tangenten an die Temperaturkurven gemäß Fig. 1. Ergibt ein Vergleich eines momentanen Gradientenwerts mit den vorab gespeicherten Gradientenwerten, daß sich die Temperatur gerade beispielsweise entsprechend der in Fig. 1 gezeigten Tangente m_{A} verhält, so bedeutet dies einen Flammenabbruch. In diesem Fall reagiert die Steuerschaltung 10 dadurch, daß sie ein Ausschaltsignal an die Brennstoffdosierpumpe 3 liefert, um die Brennstoffzufuhr zu unterbrechen. Die Erfindung ist nicht nur, aber vorzugsweise einsetzbar bei solchen Heizgeräten, die einen thermisch relativen trägen Druckgußwärmetauscher besitzen.

## Patentansprüche

1. In mehreren Leistungsstufen betreibbares Heizgerät für Kraftfahrzeuge als Stand- oder Fremdheizung mit einem mit flüssigem Brennstoff arbeitenden Brenner und einem Wärmetauscher, der eine Brennkammer des Brenners umgibt, und einer Betriebsüberwachungsvorrichtung mit einem auf Temperaturänderungen im Heizgerät ansprechenden Fühler (5), an den eine Steuerschaltung (10) angeschlossen ist, und der ein ein temperaturabhängiges, zeitlich veränderliches elektrisches Ausgangssignal lieferndes Bauteil (5) ist, wobei die Steuerschaltung (10) aus den elektrischen Ausgangssignalen des Fühlers (5) wiederholt die Temperaturänderungsgeschwindigkeit kennzeichnende Werte erzeugt,
dadurch gekennzeichnet,
daß die Steuerschaltung (10) eine Auswerteeinrichtung enthält, die die Werte der Temperaturänderungsgeschwindigkeit in der Brennkammer oder am Wärmetauscher, d. h. einen Temperaturanstieg oder einen Temperaturabfall kennzeichnende Werte, mit mehreren, vorab empirisch ermittelten Temperaturgradientenwerten vergleicht, von denen ein erster dem Temperaturabfall bei Flammenabbruch, ein zweiter dem Temperaturabfall bei bzw. nach Umschalten des Heizgeräts von einer höheren auf eine niedrigere Leistungsstufe und ein dritter dem Temperaturanstieg beim Starten des Brenners entspricht, um festzustellen, ob ggf. ein Flammenabbruch oder eine Umschaltung auf eine niedrige Leistungsstufe erfolgt ist oder nach einem Starten des Brenners keine Flamme erzeugt wurde.

2. Heizgerät nach Anspruch 1, dadurch gekennzeichnet, daß als Übereinstimmungskriterium die kleinste ermittelte Differenz zwischen dem Wert der Temperaturänderungsgeschwindigkeit an dem Wärmetauscher oder in der Brennkammer und dem ersten bzw. dem zweiten Temperaturgradientenwert dient.

3. Heizgerät nach Anspruch 1, dadurch gekennzeichnet, daß die Steuerschaltung (10) nach dem Einschalten des Brenners den Anstieg der Temperatur am Wärmetauscher oder in der Brennkammer ermittelt, und, wenn dieser geringer ist als ein spezifischer Vorgabewert, die Brennstoffzufuhr zu dem Brenner unterbricht.

4. Heizgerät nach Anspruch 1, dadurch gekennzeichnet, daß die Auswerteeinrichtung wiederholt aus einer Temperatur ϑ₁ zu jeweils einem Zeitpunkt t₁ unter Berücksichtigung spezifischer Geräteeigenschaften nach einem Algorithmus eine Zieltemperatur ϑ₂ zu einem Zeitpunkt t₂ berechnet, und der so berechnete Vorgabewert anhand der tatsächlichen Temperatur am Wärmetauscher oder in der Brennkammer im Zeitpunkt t₂ überprüft wird.

## Claims

1. Heating device which can be operated in a plurality of output levels for motor vehicles as an independent or autonomous heating means, having a liquid fuel-operated burner and a heat exchanger, which surrounds a combustion chamber of the burner, and an operation monitoring apparatus having a sensor (5) which responds to temperature changes in the heating device and to which a control circuit (10) is connected and which is a component (5) which supplies a temperature-dependent, time-variable electrical output signal, the control circuit (10) repeatedly producing values characterizing the speed of temperature change from the electrical output signals of the sensor (5), characterized in that the control circuit (10) contains an evaluation device which compares the values of the speed of temperature change in the combustion chamber or at the heat exchanger, i.e. values characterizing a rise in temperature or a fall in temperature, with a plurality of previously empirically determined temperature gradient values, of which a first corresponds to the fall in temperature on flame cessation, a second corresponds to the fall in temperature on or after switching the heating device over from a higher to a lower output level and a third corresponds to the rise in temperature on starting the burner, in order to determine whether a flame cessation or a switching over to a low output level has occurred or whether no flame has been produced after starting the burner.

2. Heating device according to Claim 1, characterized in that the smallest determined difference between the value of the speed of temperature change at the heat exchanger or in the combustion chamber and the first or the second temperature gradient value serves as a criterium of coincidence.

3. Heating device according to Claim 1, characterized in that the control circuit (10), once the burner has been switched on, determines the rise in temperature in the heat exchanger or at the combustion chamber, and if this is lower than a specific predetermined value interrupts the fuel supply to the burner.

4. Heating device according to Claim 1, characterized in that the evaluation device repeatedly calculates a target temperature ϑ₂ at a point in time t₂ from a temperature ϑ₁ at in each case a point in time t₁ according to an algorithm taking into account specific device properties, and the predetermined value calculated thus is checked with reference to the actual temperature at the heat exchanger or in the combustion chamber at the point in time t₂.

## Revendications

1. Appareil de chauffage pour véhicules, présentant plusieurs niveaux de puissance et faisant fonction de chauffage auxiliaire ou externe, comportant un brûleur à combustible liquide et un échangeur thermique entouré par une chambre de combustion du brûleur, comportant également un dispositif de surveillance du fonctionnement incluant un capteur (5) qui réagit aux changements de température dans l'appareil de chauffage, auquel est raccordé un dispositif de commande (10) et qui est un composant (5) dépendant de la température et fournissant un signal de sortie électrique pouvant varier dans le temps, le dispositif de commande (10) produisant de manière répétée les valeurs caractéristiques de la vitesse à laquelle la température change à partir des signaux de sortie électriques du capteur (5), caractérisé en ce que le dispositif de commande (10) contient un dispositif d'analyse qui compare la vitesse à laquelle la température change dans la chambre de combustion ou sur l'échangeur thermique, c'est-à-dire des valeurs caractérisant une augmentation ou une chute de température, à plusieurs valeurs de gradients de température préalablement déterminées de façon empirique, dont l'une correspond à la chute de température en cas d'extinction de la flamme, dont la deuxième correspond à la chute de température lors de la commutation ou après la commutation de l'appareil de chauffage d'un niveau de puissance supérieur à un niveau de puissance inférieur, et dont la troisième correspond à l'augmentation de la température lors de la mise en marche du brûleur, afin de déterminer si, le cas échéant, il y a eu une extinction de la flamme ou si l'appareil a été commuté à un niveau de puissance inférieur, ou si aucune flamme n'a été générée après la mise en marche du brûleur.

2. Appareil de chauffage selon la revendication 1, caractérisé en ce que la plus petite différence établie entre la valeur de la vitesse de changement de température sur l'échangeur thermique ou dans la chambre de combustion et la première ou la deuxième valeur de gradient de température sert de critère de concordance.

3. Appareil de chauffage selon la revendication 1, caractérisé en ce que le dispositif de commande (10) détermine l'augmentation de la température sur l'échangeur thermique ou dans la chambre de combustion après la mise en marche du brûleur et, lorsque cette augmentation est inférieure à une valeur de consigne spécifique, coupe l'alimentation en combustible du brûleur.

4. Appareil de chauffage selon la revendication 1, caractérisé en ce que le dispositif d'analyse calcule de façon répétée à partir d'une température ϑ₁ à un instant t₁, tout en tenant compte des caractéristiques spécifiques de l'appareil, une température cible ϑ₂ à un instant t_{2,} et en ce que la valeur de consigne ainsi calculée est contrôlée à l'appui de la température réelle sur l'échangeur thermique ou dans la chambre de combustion à l'instant t₂.
